# FASCICULE DE BREVET EUROPEEN

(11) **EP 1 813 527 B1**
(45) Date de publication et mention de la délivrance du brevet: **06.08.2008**
(21) Numéro de dépôt: 07001792.6
(22) Date de dépôt: 26.01.2007
(51) Int. Cl.: B64C 1/00, B64C 27/04

(54) **Structure composite anti-crash à maintien latéral pour aéronef**
Aufprallschutzstruktur aus Verbundwerkstoff und mit seitlicher Führung für Luftfahrzeuge
Composite anti-crash structure with lateral restraint for aircraft

(30) Priorité: 27.01.2006 FR 0600773
(43) Date de publication de la demande: 01.08.2007
(73) Titulaire: EUROCOPTER, 13725 Marignane Cédex (FR)
(72) Inventeur: Payen, Hervé, 13880 Velaux (FR)
(74) Mandataire: Pouillot, Laurent Pierre Paul

(56) Documents cités:
- DE-A1- 4 417 889
- FR-A- 2 632 604
- FR-A- 2 817 608
- US-A- 4 593 870
- US-A- 5 069 318

## Description

L'invention vise une structure composite anti-crash pour un aéronef, ainsi qu'un tel aéronef comportant une telle structure.

L'invention s'applique en particulier aux giravions, notamment aux hélicoptères.

La structure de tels appareils doit être compatible avec des contraintes fonctionnelles, normatives, ainsi que de certification notamment.

Lors d'un impact (crash) de l'appareil avec le sol, les dégâts matériels doivent être limités voire annihilés, notamment à proximité de la cabine et de constituants vitaux de l'appareil. En effet, tous dommages humains inacceptables doivent alors être évités.

À l'heure actuelle, le respect de certaines spécifications est antinomique à l'obtention de fonctions souhaitées pour tel ou tel constituant d'un aéronef, ce qui oblige à des compromis qui ne sont pas toujours acceptables en pratique. Ceci est particulièrement pertinent pour les appareils à voilure tournante.

La recherche d'une capacité accrue d'absorption de l'énergie due à un choc (accident) par la structure d'un aéronef, a abouti à diverses propositions.

Le document DE-A-4417889 montre une structure d'aéronef selon la préambule de la revendication 1.

Le brevet FR-2632604 décrit une structure d'hélicoptère comportant un cadre essentiellement constitué d'un portique dont les extrémités sont reliées par une traverse. Une structure particulière permet d'obtenir une déformation contrôlée de la traverse par amorce de flambage en cas de choc.

Les brevets US-4084029, US-4734146 et FR-2817608 sont relatifs à des poutres comportant une âme ondulée composite de forme sinusoïdale.

Diverses autres structures d'absorption d'énergie en cas d'impact du fuselage d'un aéronef contre le sol ont par ailleurs été proposées.

Le brevet US-6620484 décrit une structure d'absorption comportant des panneaux composites verticaux au travers desquels un fil est cousu selon une densité croissante de la base de la structure vers sa partie supérieure.

Le brevet US-4593870 est relatif à un absorbeur de choc s'étendant sous le plancher de la cabine d'un hélicoptère et comportant un réseau de poutres entrecroisées comportant un laminé ou deux laminés recouvrant un noyau à structure en nid d'abeille. Des amorces de rupture sont prévues à la base du stratifié.

Le brevet US-4941767 décrit un croisillon et des liaisons par des pièces à section en anneau.

Le brevet US-5069318, décrit un renfort entourant une paroi mince afin de stabiliser sa tenue en cas de crash. Le brevet US-6718713 décrit un organe préformé avec un canal d'insertion d'une cloison plane. Le document WO-03018295 décrit un organe préformé en forme de lettre "Pi", pour l'assemblage de pièces en composite.

La présente invention s'applique en particulier aux giravions dont la structure inférieure comporte un compartiment recevant - ou destiné à recevoir - un équipement (tel qu'un réservoir à carburant) susceptible d'exercer, lors d'un crash, une poussée sur une paroi latérale du compartiment.

Le brevet FR-2763313 décrit une installation de suspension par des sangles d'un réservoir souple de carburant logé dans un compartiment. Lors d'un crash, l'énergie cinétique due à la masse de carburant provoque la rupture de la cloison inférieure du compartiment et la déformation plastique des sangles.

Le brevet US-5451015 décrit un hélicoptère dont la structure comporte un compartiment recevant un réservoir souple à carburant ; le compartiment comporte quatre parois latérales et une paroi inférieure qui sont renforcées par des raidisseurs. Une mousse de polyuréthane est prévue entre le réservoir souple et ces parois. Les résistances respectives de la mousse et des parois sont ajustées pour que, lors d'un choc, la poussée du carburant ne détruise pas entièrement les parois du compartiment.

Malgré ces recherches, il subsiste un besoin pour une structure améliorée d'aéronef pour la reprise d'effort et l'absorption d'énergie résultant d'un choc.

A cet effet, selon un aspect de l'invention, il est proposé une structure d'aéronef comportant une première paroi et une seconde paroi, la première paroi comportant deux enveloppes en matériau composite disposées de part et d'autre d'un agencement intermédiaire. La structure et/ou la première paroi comporte au moins une semelle par laquelle la première paroi est fixée à la seconde paroi, et comporte en outre au moins un organe allongé s'étendant en regard et à distance d'une enveloppe. L'organe allongé est fixé à la semelle ou à la seconde paroi et est arrangé pour servir d'appui à une partie de la première paroi séparée de la semelle à la suite d'une rupture de la première paroi elle-même.

Selon des modes préférés de réalisation de l'invention :
- les parois font partie d'un compartiment destiné à recevoir un équipement- tel qu'un réservoir de fluide - susceptible d'exercer contre la première paroi une poussée latérale ;
- la structure comporte un plancher ; la première paroi est en forme de poutre dont l'âme s'étend le long d'un premier plan sensiblement perpendiculaire au plancher, et la seconde paroi s'étend le long d'un second plan peu incliné pat rapport au plancher, et lesdites parois s'étendent sous le plancher ;
- l'organe allongé est creux et fixé à la semelle et/ou à la seconde paroi par collage ou rivetage par exemple ;
- l'organe allongé est réalisé dans un matériau composite et présente une section transversale sensiblement identique sur toute sa longueur , de contour ouvert ; les enveloppes étant réalisées dans matériau composite.
- l'organe allongé s'étend parallèlement à la semelle et au dessus de cclle-ci ;
- l'organe allongé comporte une face d'appui après rupture pour la partie inférieure de la première paroi, qui est sensiblement plane et s'étend sensiblement parallèlement à une des enveloppes sur une partie seulement de la demi hauteur de la première paroi.
- l'enveloppe comporte un affaiblissement en forme d'interruption localisée d'au moins une couche d'enveloppe, cette interruption localisée s'étendant au dessus de la semelle, l'organe allongé s'étendant (en partie) au dessus de cette interruption ;
- les deux enveloppes de la première paroi comportent chacune au moins un affaiblissement pour favoriser une dégradation symétrique de la paroi lors d'un choc selon une direction contenue dans un plan le long duquel s'étend l'âme de la première paroi ;
- la structure comporte deux organes allongés sensiblement identiques, disposés de part et d'autre de la première paroi, les organes allongés délimitant avec la semelle un réceptacle en forme de rainure susceptible de contenir des débris résultant de la rupture et de l'écrasement de la première paroi ;
- l'agencement intermédiaire d'au moins une des parois contient un matériau alvéolaire tel qu'une mousse synthétique ou une structure en nid d'abeille.

Un autre objet de l'invention vise un aéronef à voilure tournante, qui possède au moins une structure composite anti-crash conforme à l'invention.

L'invention permet d'intégrer dans une structure de reprise d'efforts essentiellement en composite, des moyens capables d'assurer une absorption remarquable d'énergie lors d'un crash, sans altérer la résistance statique de cette structure.

D'autres aspects, caractéristiques, et avantages de l'invention apparaissent dans la description suivante, qui se réfère aux dessins annexés et qui illustre, sans aucun caractère limitatif, des modes préférés de réalisation de l'invention.

La figure 1 est une vue schématique d'élévation longitudinale d'un hélicoptère conforme à l'invention, représenté de côté avec son extrémité avant dite « nez » vers la gauche et son extrémité arrière dite « queue » vers la droite.

La figure 2 est une vue en perspective « éclatée » (de côté et de dessus) d'une structure d'hélicoptère selon l'invention, avec ses constituants illustrés avant assemblage.

La figure 3 est une vue en perspective simplifiée de la liaison de deux parois d'une structure selon l'invention.

La figure 4 est une vue en coupe dans un plan vertical (selon IV-IV) de la figure 3,

Les figures 5 et 6 sont deux vues schématiques en coupe dans un plan vertical, qui illustrent la liaison de deux telles parois, respectivement avant et après la rupture d'une des parois.

Dans les dessins, où des éléments identiques ou similaires sont désignés par les mêmes numéros de référence, sont représentées trois directions orthogonales les unes aux autres.

Une direction Z dite d'élévation ou verticale, correspond aux hauteur et épaisseur des structures décrites ; les termes haut/bas ou inférieur/supérieur s'y réfèrent.

Une autre direction X dite longitudinale ou horizontale, correspond aux longueur ou dimension principales des structures décrites. Les termes avant/arrière s'y réfèrent.

Une autre direction Y dite transversale ou horizontale, correspond aux largeur ou dimension latérales des structures décrites. Le terme côté s'y réfère.

Les directions X et Y définissent un plan X, Y horizontal. Les directions X et Z définissent un plan X, Z longitudinal (et vertical). Les directions Y et Z définissent un plan Y, Z transversal (et vertical).

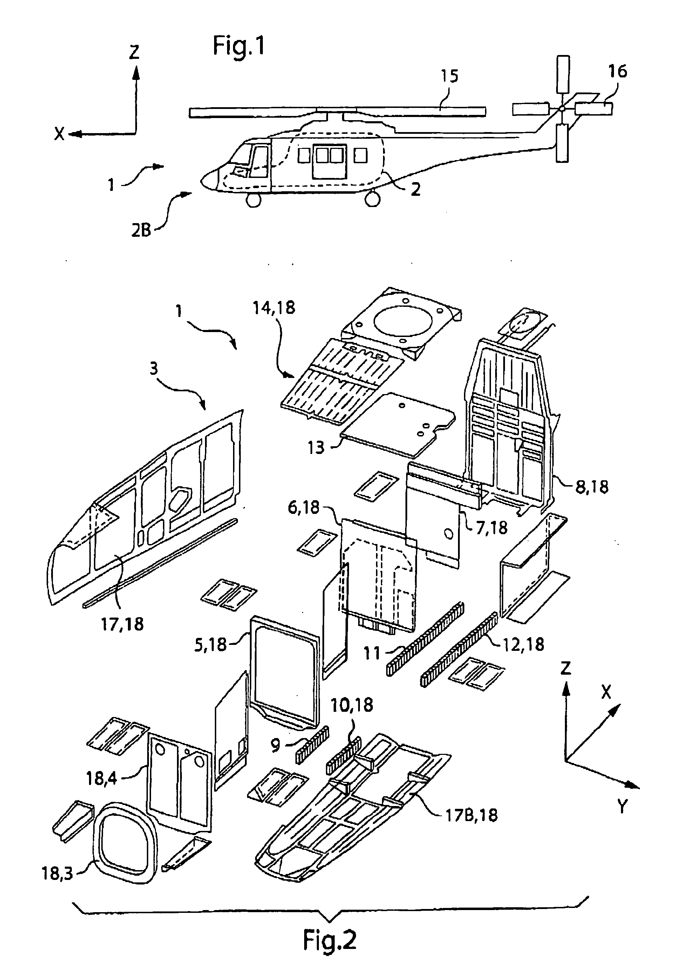

Sur les figures 1 et 2, l'aéronef 1 est un hélicoptère comportant un fuselage 2B, un rotor principal 15, et un rotor anti-couple 16. L'invention peur être mise en oeuvre dans d'autres types d'aéronefs, tant à voilure fixe que plus légers que l'air par exemple.

Sur les figures 1 ou 2, on remarque une structure 2 de reprise d'efforts. Une telle structure 2 apporte notamment au fuselage 2B de l'appareil 1, la rigidité requise à son fonctionnement, ainsi qu'un comportement sécuritaire en cas de crash.

Cette structure 2 de reprise d'efforts comporte, sur la figure 2 notamment, des parois 18 porteuses sous forme :
i) de cadres 3 à 8 transversaux repérés de l'arrière (à gauche) à l'avant (à droite) ;
ii) de poutres longitudinales 9 à 12 ;
iii) d'un plancher 13 ;
iv) d'un plancher technique 14 apte à supporter une boite de transmission principale couplée au rotor 15 principal d'entraînement et de sustentation ainsi qu'au rotor arrière 16 ;
v) de parois en forme de cloisons, telles que celles repérées 17 et 17B qui servent à l'habillage de la structure 2 et forment des parties latérale et ventrale du fuselage 2B.

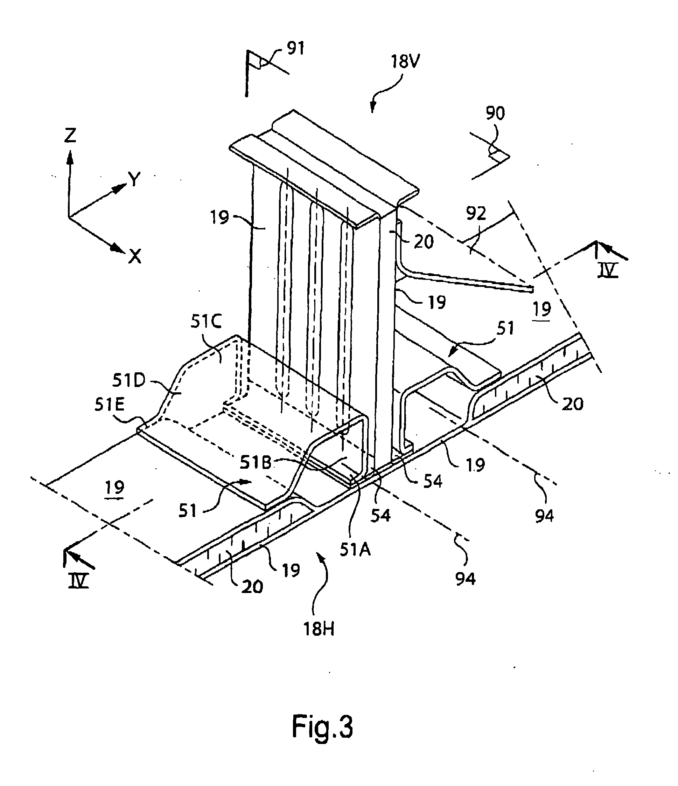

La structure 2 de reprise d'efforts est de type composite (stratifiée). Par référence aux figures 3 à 4 notamment, chaque paroi 18 de la structure 2 comporte des enveloppes 19 externes généralement planes et disposées de part et d'autre d'un agencement 20 intermédiaire.

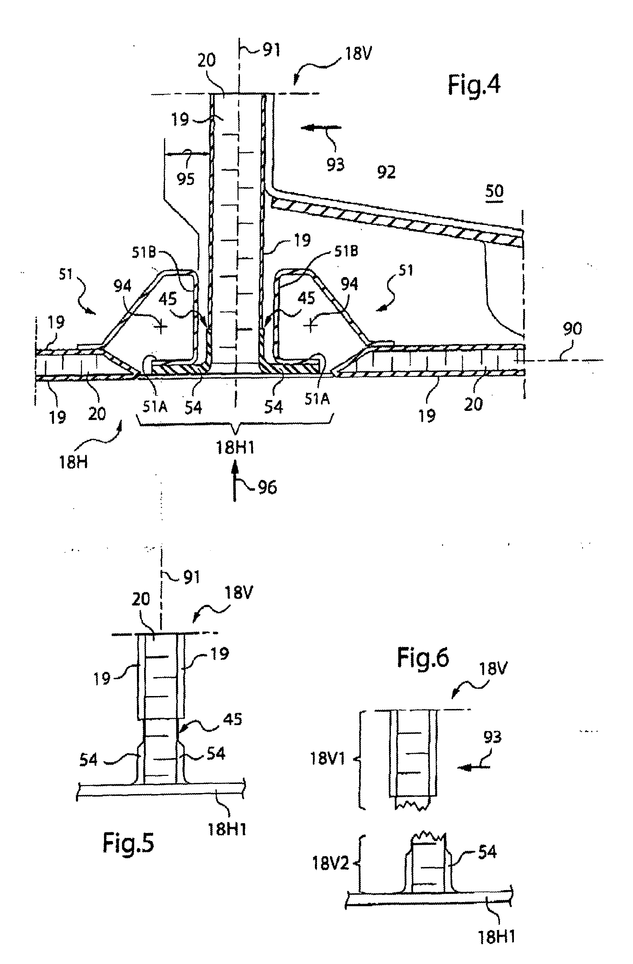

Sur les figures 3 et 4 notamment, la structure 2 comporte deux parois 18H et 18V, chacune avec un assemblage d'enveloppes 19 et un agencement 20. Les peaux ou enveloppes 19 sont réalisées à partir d'un tissu de fibres imprégnées d'une résine. Les pièces en matériau composite peuvent être formées par moulage à chaud, par exemple à une température de moulage de l'ordre de 180° C. L'agencement 20 est constitué d'un nid d'abeille auquel adhèrent les enveloppes 19.

Chaque enveloppe 19 peut comporter plusieurs couches empilées, par exemple :
- une couche extérieure en pli de tissu composite en fibres de carbone imprégnées étendues sensiblement suivant un angle de l'ordre de 45° (degrés) par rapport à la direction principale d'absorption d'énergie Z;
- une couche médiane en pli de tissu composite en fibres aramide imprégnées étendues sensiblement suivant un angle de l'ordre de 45° par rapport à la direction Z; et
- une couche intermédiaire en pli de tissu composite en fibres de carbone imprégnées étendues sensiblement suivant un angle de l'ordre de 0° ou 90° par rapport à la direction Z.

D'autres couches peuvent être prévues dont les fibres sont orientées suivant un angle nul (0°) par rapport à la direction Z. Dans un tel empilement, on peut distinguer des couches impaires incluant la couche extérieure de l'enveloppe 19 externe dite "premier pli", et des couches paires pouvant inclure une couche intérieure dite « dernier pli ».

Certaines couches de la paroi peuvent comporter des fibres agencées intérieurement en croix, c'est-à-dire en sous couches de fibres s'étendant selon des directions sécantes suivant un angle prédéterminé (90° par exemple), d'une sous couche à l'autre. Ces sous couches peuvent être conjointement imprégnées de résine au sein d'un même substrat.

Dans d'autres couches, les fibres sont disposées en nappes à orientation uniforme, c'est-à-dire sensiblement en parallèle.

Par référence aux figures 4 à 6, chaque enveloppe 19 de la poutre 18V est solidaire à sa base d'une semelle 54 en forme de cornière dont un flanc s'étend contre l'enveloppe.

Par ailleurs, l'agencement intermédiaire 20 de la paroi 18H est interrompu au droit de ces semelles : les deux enveloppes 19 de chacune des portions (gauche et droite) de la paroi 18H se rejoignent et forment une partie amincie 18H1 sur laquelle sont fixées les deux semelles 54 par leur flanc s'étendant parallèlement au plan 90 selon lequel s'étend la paroi 18H.

La paroi 18V s'étend selon un plan 91 sensiblement perpendiculaire au plan 90. En position d'utilisation de la structure, le plan 91 est sensiblement vertical tandis que le plan 90 est sensiblement horizontal.

Comme illustré figure 5 notamment, chaque enveloppe 19 de la poutre 18V présente une zone 45 de moindre résistance qui s'étend le long de la semelle correspondante, au-dessus de celle-ci, sensiblement le long d'un axe parallèle à l'intersection des plans 90 et 91.

Une paroi 92 incurvée (figures 3 et 4) délimite un réservoir de carburant 50. Cette paroi 92 s'appuie contre la poutre 18V et est susceptible de transmettre à cette poutre une poussée latérale 93.

Notamment en cas de crash de l'aéronef comportant cette structure, les efforts verticaux 96 (figure 4) s'exerçant sur la paroi 18V peuvent occasionner la rupture de cette paroi 18V, comme illustré schématiquement figure 6, et peuvent aboutir à la séparation de la poutre 18V en deux parties : une partie supérieure 18V1 et une partie inférieure 18V2 qui comporte les semelles 54 restées solidaires de la paroi 18H-18H1. Cette rupture peut notamment intervenir le long des zones 45 réalisées sous forme d'interruptions de plis des enveloppes 19 de la poutre, 18V.

Pour que l'absorption de l'énergie par la paroi 18V soit optimale lors du crash, il est souhaitable que la partie supérieure 18V1 soit peu déviée - sinon pas déviée - par la poussée latérale 93.

Dans cette hypothèse, le maintien des parois 18H-18H1 et 18V-18V1-18V2 dans une position relative sensiblement perpendiculaire, est assuré par les deux profilés 51 s'étendant de part et d'autre de la base de la poutre 18V.

Comme illustré en partie gauche des figures 3 et 4, chacun des deux profilés creux 51 comporte cinq faces ou lames planes s'étendant parallèlement à l'axe longitudinal 94 du profilé :
- une première face 51A du profilé 51 repose sur la semelle 54 et sert à assembler le profilé aux parois 18V, 18H ;
- une seconde face 51B s'étend le long et en regard de la base de l'enveloppe 19 de la paroi 18V, à faible distance 95 (figure 4) de celle-ci ;
- une cinquième face 51E repose sur - et est fixée à la paroi 18H ;
- les troisième et quatrième faces 51C et 51D relient les faces 51B et 51E.

Ces faces forment une barre creuse de section à contour ouvert présentant approximativement une forme de point d'interrogation.

Ces profilés permettent ainsi un maintien des parois 18H et 18V dans une position relative sensiblement inchangée lors d'une détérioration ou rupture de la base de la poutre 18V, que cela résulte d'un choc (crash) selon la direction verticale 96 (figure 4) ou bien d'une poussée latérale 93 (figures 4 et 6) selon une direction sensiblement horizontale.

## Revendications

1. Structure (2) d'aéronef (1) comportant une première paroi (18V) et une seconde paroi (18H), la première paroi comportant deux enveloppes (19) disposées de part et d'autre d'un agencement intermédiaire (20), et comportant au moins une semelle (54) par laquelle la première paroi est fixée à la seconde paroi,
**caractérisée en ce qu'**elle comporte en outre au moins un organe allongé (51) s'étendant en regard et à distance d'une enveloppe (19), l'organe allongé étant fixé à la semelle ou à la seconde paroi et étant arrangé pour servir d'appui à une partie (18V1) de la première paroi séparée de la semelle à la suite d'une rupture de la première paroi.

2. Structure (2) selon la revendication 1, dans laquelle les parois font partie d'un compartiment destiné à recevoir un équipement (50) - tel qu'un réservoir de fluide - susceptible d'exercer une poussée latérale contre la première paroi (18V) .

3. Structure (2) selon la revendication 1 ou 2, qui comporte un plancher (13), dans laquelle la première paroi (18V) est en forme de poutre (9-12) dont l'âme s'étend le long d'un premier plan sensiblement perpendiculaire au plancher, et la seconde paroi s'étend le long d'un second plan peu incliné par rapport au plancher, et dans laquelle lesdites parois s'étendent sous le plancher.

4. Structure (2) selon l'une quelconque des revendications 1 à 3, dans laquelle l'organe allongé (51) est creux et fixé à la semelle et à la seconde paroi.

5. Structure (2) selon l'une quelconque des revendications 1 à 4, dans laquelle l'organe allongé (51) est réalisé dans un matériau composite et présente une section transversale sensiblement identique sur toute sa longueur, de contour ouvert, et dans laquelle les enveloppes (19) sont réalisées dans un matériau composite.

6. Structure (2) selon l'une quelconque des revendications 1 à 5, dans laquelle l'organe allongé (51) s'étend parallèlement à la semelle et au dessus de celle-ci.

7. Structure (2) selon l'une quelconque des revendications 1 à 6, dans laquelle l'organe allongé (51) comporte une face d'appui après rupture pour la partie inférieure (18V1) de la première paroi, qui est sensiblement plane et s'étend sensiblement parallèlement à une des enveloppes sur une partie seulement de la demi hauteur de la première paroi.

8. Structure (2) selon l'une quelconque des revendications 1 à 7, dans laquelle l'enveloppe (19) comporte un affaiblissement (45) en forme d'interruption localisée d'au moins une couche d'enveloppe, cette interruption (45) localisée s'étendant au dessus de la semelle, l'organe allongé (51) s'étendant au dessus de cette interruption.

9. Structure (2) selon l'une quelconque des revendications 1 à 8, dans laquelle les deux enveloppes de la première paroi comportent chacune au moins un affaiblissement (45) pour favoriser une dégradation symétrique de la paroi lors d'un choc selon une direction contenue dans un plan le long duquel s'étend l'âme de la première paroi.

10. Structure (2) selon l'une quelconque des revendications 1 à 9, qui comporte deux organes allongés (51) sensiblement identiques, disposés de part et d'autre de la première paroi, les organes allongés délimitant avec la semelle un réceptacle en forme de rainure susceptible de contenir des débris résultant de la rupture et de l'écrasement de la première paroi.

11. Structure (2) selon l'une quelconque des revendications 1 à 10, dans laquelle l'agencement (20) intermédiaire d'au moins une des parois contient un matériau alvéolaire tel qu'une mousse synthétique ou une structure en nid d'abeille.

12. Aéronef (1) à voilure tournante **caractérisé en ce que** qu'il comporte une structure (2) selon l'une quelconque des revendications 1 à 11.

## Claims

1. A structure (2) of an aircraft (1) comprising a first wall (18V) and a second wall (18H), the first wall comprising two jackets (19) disposed on either side of an intermediate arrangement (20), and comprising at least one soleplate (54) by means of which the first wall is secured to the second wall,
**characterised in that** it furthermore comprises at least one elongate member (51) extending opposite a jacket (19) and spaced apart therefrom, the elongate member being secured to the soleplate or to the second wall and being disposed to serve as an abutment for a part (18V1) of the first wall which is separated from the soleplate as a result of the first wall rupturing.

2. A structure (2) according to Claim 1, in which the walls form part of a compartment intended to receive equipment (50) - such as a fluid tank - capable of exerting a lateral thrust against the first wall (18V).

3. A structure (2) according to Claim 1 or 2, which comprises a floor (13), in which the first wall (18V) is in the form of a beam (9-12) the core of which extends along a first plane which is substantially perpendicular to the floor, and the second wall extends along a second plane which is slightly inclined relative to the floor, and in which said walls extend under the floor.

4. A structure (2) according to any one of Claims 1 to 3, in which the elongate member (51) is hollow and secured to the soleplate and to the second wall.

5. A structure (2) according to any one of Claims 1 to 4, in which the elongate member (51) is made of a composite material and has a cross-section which is substantially identical over its entire length, of open contour, and in which the jackets (19) are made of a composite material.

6. A structure (2) according to any one of Claims 1 to 5, in which the elongate member (51) extends parallel to the soleplate and above it.

7. A structure (2) according to any one of Claims 1 to 6, in which the elongate member (51) comprises a bearing face for the lower part (18V1) of the first wall after rupturing, which is substantially planar and extends substantially parallel to one of the jackets over only a part of half the height of the first wall.

8. A structure (2) according to any one of Claims 1 to 7, in which the jacket (19) comprises a zone of weakness (45) in the form of a localised interruption of at least one jacket layer, this localised interruption (45) extending above the soleplate, the elongate member (51) extending above this interruption.

9. A structure (2) according to any one of Claims 1 to 8, in which the two jackets of the first wall each comprise at least one zone of weakness (45) to encourage symmetrical degradation of the wall in the event of an impact in a direction contained in a plane along which the core of the first wall extends.

10. A structure (2) according to any one of Claims 1 to 9, which comprises two substantially identical elongate members (51), disposed on either side of the first wall, the elongate members defining, with the soleplate, a groove-shaped receptacle capable of containing debris resulting from the rupturing and the crushing of the first wall.

11. A structure (2) according to any one of Claims 1 to 10, in which the intermediate arrangement (20) of at least one of the walls contains a cellular material such as a synthetic foam or a honeycomb structure.

12. A rotary-wing aircraft (1), **characterised in that** it comprises a structure (2) according to any one of Claims 1 to 11.

## Patentansprüche

1. Struktur (2) eines Luftfahrzeugs (1), die eine erste Wand (18V) und eine zweite Wand (18H) aufweist, wobei die erste Wand zwei Hüllen (19) aufweist, die zu beiden Seiten einer Zwischeneinrichtung (20) angeordnet sind, und mindestens eine Grundplatte (54) aufweist, über die die erste Wand an der zweiten Wand befestigt ist,
**dadurch gekennzeichnet, dass** sie außerdem mindestens ein liegendes Organ (51) aufweist, das sich gegenüber und in Abstand zu einer Hülle (19) erstreckt, wobei das liegende Organ an der Grundplatte oder an der zweiten Wand befestigt und eingerichtete ist, um für einen Teil (18V1) der ersten Wand als Auflage zu dienen, der von der Grundplatte nach einem Bruch der ersten Wand getrennt ist.

2. Struktur (2) nach Anspruch 1, bei der die Wände Teil eines Abteils sind, das dazu bestimmt ist, eine Ausrüstung (50) - wie einen Flüssigkeitstank - aufzunehmen, die einen seitlichen Schub gegen die erste Wand (18V) ausüben kann.

3. Struktur (2) nach Anspruch 1 oder 2, die einen Boden (13) aufweist, bei der die erste Wand (18V) die Form eines Balkens (9-12) hat, dessen Steg sich entlang einer ersten Ebene im Wesentlichen lotrecht zum Boden erstreckt, und die zweite Wand sich entlang einer zweiten Ebene wenig geneigt bezüglich des Bodens erstreckt, und bei der die Wände sich unter dem Boden erstrecken.

4. Struktur (2) nach einem der Ansprüche 1 bis 3, bei der das liegende Organ (51) hohl und an der Grundplatte und der zweiten Wand befestigt ist.

5. Struktur (2) nach einem der Ansprüche 1 bis 4, bei der das liegende Organ (51) aus einem Verbundmaterial hergestellt ist und einen im Wesentlichen gleichen (konstanten) Querschnitt über seine ganze Länge (wie ein Profilstück) aufweist, und bei der die Hüllen (19) aus einem Verbundmaterial hergestellt sind.

6. Struktur (2) nach einem der Ansprüche 1 bis 5, bei der das liegende Organ (51) sich parallel zur Grundplatte und oberhalb dieser erstreckt.

7. Struktur (2) nach einem der Ansprüche 1 bis 6, bei der das liegende Organ (51) eine Auflageseite nach einem Bruch für den unteren Teil (18V1) der ersten Wand aufweist, die im Wesentlichen eben ist und sich im Wesentlichen parallel zu einer der Hüllen nur über einen Teil der halben Höhe der ersten Wand erstreckt.

8. Struktur (2) nach einem der Ansprüche 1 bis 7, bei der die Hülle (19) eine Schwächung (45) in Form einer lokalisierten Unterbrechung mindestens einer Hüllenschicht aufweist, wobei diese lokalisierte Unterbrechung (45) sich über der Grundplatte erstreckt, wobei das liegende Organ (51) sich über dieser Unterbrechung erstreckt.

9. Struktur (2) nach einem der Ansprüche 1 bis 8, bei der die zwei Hüllen der ersten Wand je mindestens eine Schwächung (45) aufweisen, um eine symmetrische Beschädigung der Wand bei einem Stoß in einer Richtung zu begünstigen, die in einer Ebene enthalten ist, entlang der sich der Steg der ersten Wand erstreckt.

10. Struktur (2) nach einem der Ansprüche 1 bis 9, die zwei im Wesentlichen gleiche liegende Organe (51) aufweist, die zu beiden Seiten der ersten Wand angeordnet sind, wobei die liegenden Organe mit der Grundplatte einen Behälter in Form einer Rille bilden, die Trümmer enthalten kann, die aus dem Bruch und dem Stauchen der ersten Wand resultieren.

11. Struktur (2) nach einem der Ansprüche 1 bis 10, bei der die Zwischeneinrichtung (20) mindestens einer der Wände ein Material mit Zellenstruktur wie einen Kunststoffschaum oder eine wabenförmige Struktur aufweist.

12. Drehflügelflugzeug (1), **dadurch gekennzeichnet, dass** es eine Struktur (2) nach einem der Ansprüche 1 bis 11 aufweist.
